# EUROPEAN PATENT APPLICATION

(11) **EP 2 017 551 A2**
(43) Date of publication of application: **21.01.2009**
(21) Application number: 07122759.9
(22) Date of filing: 10.12.2007
(51) Int. Cl.: F24J 2/04, F24J 2/26, F24J 2/50

(54) **Solar heat exchanger**

(30) Priority: 20.07.2007 GB 0714404
(71) Applicant: MacGregor, Archibald W.K., Midlothian EH23 4SQ (GB)
(72) Inventor: MacGregor, Archibald W.K., Midlothian EH23 4SQ (GB)
(74) Representative: Murgitroyd, Ian George

(57) **Abstract**

A heat exchanger (10) which may be used to use solar energy to heat water comprises a substantially rigid roof member (20), such as an existing corrugated or planar roof; a substantially transparent sheet (30) overlaying the roof member; and a flexible pipe (28) provided between the roof member and the transparent sheet. The transparent sheet (30) allows sunlight to pass through to warm the roof member, which acts as an absorber. The flexible pipe (28) is in contact with the roof member and heat is transferred from the roof member to the pipe to heat up water flowing through the pipe. The heat exchanger is freeze resistant, is simple and economical to build and makes effective use of the existing roof structure as one of its components.

## Description

The present invention relates to heat exchangers adapted to extract heat from solar energy. In particular, but not exclusively, the invention relates to heat exchangers mountable to a surface of a building and using solar energy to heat water.

EP 1 632 731 A2 describes a heat exchanger formed using a flexible polymer pipe arranged between a rigid insulating foam layer and a flexible sheet of high thermal conductivity, for example aluminium. Radiation from the sun heats the flexible sheet, and heat is transferred from the sheet to a fluid flowing in the pipe by contact between the pipe and the sheet.

Such heat exchangers are suitable for use in areas where other energy sources for heating water are not available. However such heat exchangers require the use of particular materials, such as rigid insulating foam boards and flexible metallic sheeting, which are not always available, particularly when used in emergency situations.

It is an object of the present invention to provide a heat exchanger which overcomes one or more of the disadvantages of the prior art.

According to the present invention there is provided a heat exchanger comprising:
a substantially rigid roof member;
a substantially transparent sheet overlaying the roof member; and
a flexible pipe provided between the roof member and the transparent sheet.

The transparent sheet may be translucent or partially obscured, such that only a proportion of impinging light passes through the sheet. The transparent sheet may be of polycarbonate or other suitable plastics material. The translucent sheet may have more than one skin, and may have a cellular structure.

Preferably the substantially rigid roof member is heat absorbing, and may be dark in colour. The roof member may have a heat absorbent coating, for example a black paint layer. The coating may be any material which improves the absorption characteristics of the roof member, or which increases the capacity of the roof member to retain heat from sunlight impinging on the roof member.

The substantially rigid roof member may be metal. It may comprise a corrugated or planar metal sheet, or any existing roof structure. The substantially rigid roof member may comprise one or more tiles or shingles.

The heat exchanger may include fastening means for attaching the transparent sheet to the rigid roof member such that the pipe is compressed between the transparent sheet and the rigid roof member.

Preferably the flexible pipe is formed from a natural or artificial rubber or a polymer. The material of the flexible pipe may include additives for enhancing thermal conductivity. The additives may include a carbon based substance, such as carbon black or graphite powder.

Preferably the flexible pipe is arranged in a serpentine or grid-like pattern. A plurality of flexible pipes may be provided. The plurality of flexible pipes may be interconnected.

In one embodiment the substantially rigid roof member may comprise a plurality of troughs and a plurality of flexible pipes may be provided in the troughs. The heat exchanger may include a plurality of spacers positioned between the transparent sheet and the flexible pipe to hold the flexible pipe against the roof member. The pipe may be compressed between the spacers and the rigid roof member.

Preferably the heat exchanger includes fluid supply means for supplying a fluid to the pipe. The fluid supply means may comprise a pump. Preferably the fluid is water or any other suitable coolant.

According to a second aspect of the present invention, there is provided a heat exchanger system comprising a plurality of heat exchangers in accordance with the first aspect of the invention.

Preferably the pipes of each of the plurality of heat exchangers are interconnected.

According to a third aspect of the present invention, there is provided a method of providing a heat exchanger on a roof, the method comprising the steps of:
providing a flexible pipe on a substantially rigid roof member;
substantially overlaying the flexible pipe with a transparent sheet; and
fastening the transparent sheet to the roof member.

The method may include compressing the flexible pipe between the transparent sheet and the roof member.

The method may include providing a heat absorbent coating on the roof member. The roof member may be an existing roof of metal or other material.

The method may include fastening the transparent sheet to the roof member using a plurality of fasteners.

The method may include arranging the flexible pipe in a serpentine or grid-like pattern.

The method may include the steps of:
exposing the heat exchanger to sunlight to heat the roof member, causing fluid to flow through the flexible pipe, and
transferring heat from the roof member to the pipe to heat the fluid.

The heated fluid may be stored in an insulated storage tank.

An embodiment of the present invention will now be described, by way of example only, with reference to the accompanying drawings, in which:
Fig. 1 is a sectional view of a heat exchanger according to the present invention; and
Fig. 2 is a sectional view of another heat exchanger according to the present invention; and
Fig. 3 is a schematic view of a heat exchanger according to the present invention installed on a roof of a building.

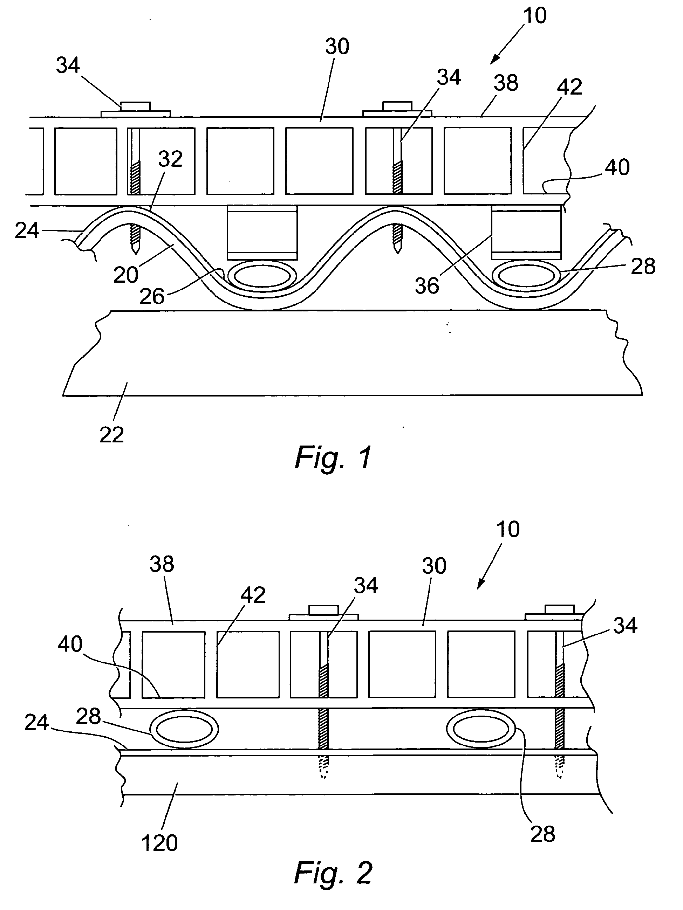

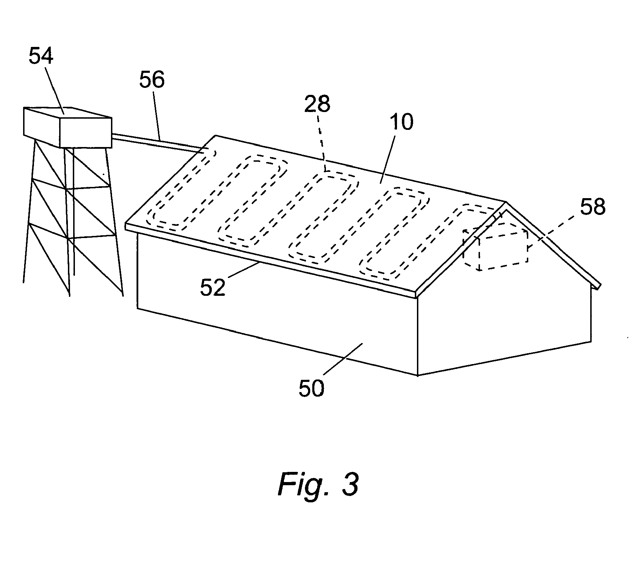

Fig. 1 shows a heat exchanger 10 according to the invention. The heat exchanger includes a substantially rigid corrugated roof member 20, for example of metal such as galvanised steel or aluminium, fixed to the substructure 22 of a building by any suitable fixings (not shown). The roof member 20 acts as an absorber of heat energy from the sun, and may be provided with a coating 24, for example of black paint or bitumen, to improve its heat absorption properties. In the valleys 26 of the corrugated roof member 20 is arranged a flexible pipe 28. The pipe 28 may be arranged in a serpentine manner, as seen more clearly in Fig. 3. Alternatively a number of separate interconnected pipes 28 may be used.

A substantially transparent sheet 30 overlays the roof member 20. It sits on the peaks 32 of the corrugated roof member 20, to which it is fastened by screw fasteners 34. Spacers 36 are provided between the transparent sheet 30 and the flexible pipe 28 so that the spacers 36 urge the pipe 28 against the roof member 20 and, because of the natural resilience of the pipe 28, increase the area of contact between the roof member 20 and pipe 28. The spacers 36 may be transparent, and may be of any suitable material. They may be of the same material as the transparent sheet 30. They may be elongated or shorter discrete spacers.

The transparent sheet 30 in this example is a polycarbonate sheet having two skins 38, 40 separated by webs 42. The term "transparent" as used in this specification means that the sheet transmits incident light through the sheet 30. The sheet 30 may not be optically clear, and may for example be translucent or obscured. In this example the spacers 36 are also formed of two skin polycarbonate sheet.

In use a coolant such as water is passed along the flexible pipe 28. Sunlight incident on the heat exchanger 10 passes through the transparent sheet 30 to the roof member 20 which acts as an absorber. The radiant effect of the sunlight heats the absorber. Because the pipe 28 is in contact with the roof member 20, heat is transmitted from the roof member 20 to the pipe 28 by conduction and hence to the coolant flowing through the pipe. Thus the coolant is heated as it passes along the flexible pipe 28. Heat transfer within the fluid may also take place by convection.

It has been found particularly beneficial to use a two skin transparent sheet having cells, since this improves the insulating properties of the transparent sheet 30. The transparent sheet 30 serves to insulate the enclosed volume beneath the transparent sheet from the atmosphere, and provides a greenhouse effect on the enclosed volume, which helps to maintain the heat in the pipe 28 and coolant.

The flexible pipe 28 is preferably a high thermal conductivity synthetic rubber, such as silicone rubber, although natural rubbers or other polymers may be used. The material may include additives for enhancing thermal conductivity, for example carbon black or graphite powder, or metallic additives.

If required, insulation or a reflective layer may be provided beneath the roof member 20 to enhance the heat retention in the absorber.

Fig. 2 shows a further example of a heat exchanger 10 according to the invention. Components which are the same as those shown in Fig. 1 are shown with the same reference numeral. In this example the substantially rigid roof member 120 is planar, for example a flat sheet of board, a tile or a shingle, fixed to the substructure 22 of the building by any suitable fixings (not shown). The material of the roof member may be metal, concrete, ceramic, composite, bitumen or any material which can absorb and conduct heat. The roof member 120 acts as an absorber of heat energy from the sun, and may be provided with a coating 24, for example of black paint or bitumen, to improve its heat absorption properties. A flexible pipe 28 is arranged in a serpentine manner on the roof member 120, as seen more clearly in Fig. 3. Alternatively a number of separate interconnected pipes 28 may be used.

A substantially transparent sheet 30 overlays the roof member 120. It is fastened to the roof member 120 by screw fasteners 34. The fasteners are driven sufficiently far to compress the pipe, so that the sheet 30 urges the pipe 28 against the roof member 120 and, because of the natural resilience of the pipe 28, increases the area of contact between the roof member 120 and pipe 28.

The heat exchanger 10 heats a coolant such as water which is passed along the flexible pipe 28 in the same way as is described with reference to Fig. 1.

Other fasteners 34 such as nails could be used instead of screw fasteners.

Fig. 3 shows the use of a heat exchanger 10 on a building 50. The heat exchanger is installed on a roof 52 of the building 50 which faces towards the sun. An elevated tank 54 supplies coolant water through a supply pipe 56. The water then flows through the pipe 28 of the heat exchanger 10 to a hot water storage tank 58. Control valves (not shown) may be provided to control the flow rate of the water. Temperature sensors (not shown) may be provided to monitor the temperature of the water. Control means may be provided to use the temperature data to control the flow rate.

Alternatively the heat exchanger 10 may include a fluid pumping means (not shown) for transporting the coolant fluid along the pipe 28.

The invention offers a simple and convenient means of providing a heat exchanger, which makes effective use of the existing roof structure as one of its components, and is thus economical to build.

The heat exchanger 10 can be assembled and installed on site, which offers greater flexibility. The fastening means used allows rapid and easy assembly in situ using conventional tools and without requiring skilled labour. The system is freeze tolerant. The outer transparent sheet 20 serves to insulate the pipe 28 and its contents from mild frosts, while the flexible nature of the transparent sheet 20 and pipe 28 allow for expansion in the case of freezing of the coolant water without damaging the structure of the heat exchanger 10.

Various modifications and improvements can be made without departing from the scope of the present invention. For instance, more than one flexible pipe 28 may be used. The transparent sheet 30 may be of any suitable material and is not limited to polycarbonate or to a two skin construction. It may be a glass fibre composite panel, any suitable plastic sheet or glass. It may be fixed by any suitable means. For example, if glass is used it may be held in place by a frame structure which is fastened to the rigid roof member beneath.

## Claims

1. A heat exchanger (10) comprising:
a substantially rigid roof member (20, 120);
a substantially transparent sheet (30) overlaying the roof member; and
a flexible pipe (28) provided between the roof member and the transparent sheet.

2. A heat exchanger according to claim 1, wherein the transparent sheet (30) is of polycarbonate having at least two skins.

3. A heat exchanger according to claim 1 or 2, wherein the substantially rigid roof member (20, 120) is a corrugated or planar metal sheet.

4. A heat exchanger according to any preceding claim, wherein the flexible pipe (28) is formed from thermally conductive synthetic rubber and is compressed between the transparent sheet (30) and the rigid roof member (20, 120).

5. A heat exchanger according to any preceding claim, wherein the substantially rigid roof member (20) comprises at least one trough (26), wherein a flexible pipe (28) is provided in the trough,
and wherein the heat exchanger includes a spacer (36) positioned between the transparent sheet (30) and the flexible pipe (28) to hold the flexible pipe in a compressed state against the roof member (20).

6. A heat exchanger according to any preceding claim, wherein the heat exchanger includes fluid supply means (56) for supplying a fluid to the pipe.

7. A method of providing a heat exchanger (10) on a roof, the method comprising the steps of:
providing a flexible pipe (28) on a substantially rigid roof member (20, 120);
substantially overlaying the flexible pipe (28) with a transparent sheet (30); and
fastening the transparent sheet (30) to the roof member (20, 120).

8. The method of claim 7, further including compressing the flexible pipe (28) between the transparent sheet (30) and the roof member (20, 120).

9. The method of claim 7 or 8, further including providing a heat absorbent coating (24) on the roof member (20, 120).

10. The method of any of claims 7 to 9, further including:
exposing the heat exchanger (10) to sunlight to heat the roof member (20, 120),
causing fluid to flow through the flexible pipe (28), and
transferring heat from the roof member (20, 120) to the pipe (28) to heat the fluid.
